# EUROPEAN PATENT APPLICATION

(11) **EP 1 884 932 A2**
(43) Date of publication of application: **06.02.2008**
(21) Application number: 07250676.9
(22) Date of filing: 19.02.2007
(51) Int. Cl.: G11B 5/62, G11B 5/84, G11B 5/09

(54) **Alloy and architecture design for heat-assisted magnetic recording**

(30) Priority: 28.07.2006 US 833809 P; 22.11.2006 US 602953
(71) Applicant: Heraeus, Inc., Chandler AZ 85226 (US)
(72) Inventor: Das, Anirban, Chandler, AZ 85225 (US); Racine, Michael Gene, Phoenix, AZ 85044 (US)
(74) Representative: Hill, Justin John

(57) **Abstract**

A magnetic recording medium for heat-assisted magnetic recording includes a magnetic data storage layer having magnetic grains separated by grain boundary phases. The grain boundary phases have a higher thermal conductivity than a thermal conductivity of the magnetic grains. The magnetic recording medium further includes a heat sink layer and one or more intermediate layers disposed between the magnetic data storage layer and the heat sink layer. Each of the one or more intermediate layers has crystalline phase grains separated by grain boundary phases. The grain boundary phases have a higher thermal conductivity than a thermal conductivity of the crystalline phase grains. The grain boundary phases in both the magnetic data storage layer and the intermediate layers provide high thermal conductivity conduits for dissipating heat from the magnetic data storage layer to the heatsink layer.

## Description

### CROSS-REFERENCE TO RELATED APPLICATION

The present application claims the benefit of priority under 35 U.S.C. §119 from U.S. Provisional Patent Application Serial No. 60/833,809 entitled "ALLOY AND ARCHITECTURE DESIGN FOR HEAT-ASSISTED MAGNETIC RECORDING," filed on July 28, 2006, the disclosure of which is hereby incorporated by reference in its entirety for all purposes.

### STATEMENT REGARDING FEDERALLY SPONSORED RESEARCH OR DEVELOPMENT

Not applicable.

### FIELD OF THE INVENTION

The present invention generally relates to magnetic recording media and, in particular, relates to magnetic recording media for heat-assisted magnetic recording ("HAMR").

### BACKGROUND OF THE INVENTION

To satisfy the ever-increasing demand for greater data storage, the capacity of magnetic recording media has been steadily rising. As a result, the areal densities of magnetic recording media have begun to reach the upper limit permitted by such low magnetocrystalline anisotropy constant ("Kᵤ") materials as CoCrPt and the like. The use of materials with higher anisotropy constants is desirable, but impracticable given the magnetic and thermal limitations imposed by magnetic data storage write mechanisms. Accordingly, there is a need for magnetic data storage with higher areal densities that can overcome these limitations.

### SUMMARY OF THE INVENTION

The present invention provides magnetic recording media with improved heat dissipation for use in heat-assisted magnetic recording ("HAMR") and methods for making such media. In accordance with one embodiment of the present invention, a magnetic recording medium includes a heatsink layer, a magnetic data storage layer, and intermediate layers between the heatsink and magnetic data storage layers. The magnetic data storage layer and the intermediate layers include high thermal conductivity conduits for dissipating heat from the magnetic data storage layer to the heatsink layer. These high thermal conductivity conduits are provided by grain boundary phases with high thermal conductivity in both the magnetic data storage layer and the intermediate layers.

According to one embodiment of the present invention, a magnetic recording medium for heat-assisted magnetic recording includes a magnetic data storage layer having a plurality of magnetic grains separated by a plurality of grain boundary phases. The plurality of grain boundary phases of the magnetic data storage layer have a higher thermal conductivity than a thermal conductivity of the plurality of magnetic grains. The magnetic recording medium further includes a heat sink layer and one or more intermediate layers disposed between the magnetic data storage layer and the heat sink layer. Each of the one or more intermediate layers has a plurality of crystalline phase grains separated by a plurality of grain boundary phases. The plurality of grain boundary phases of the one or more intermediate layers have a higher thermal conductivity than a thermal conductivity of the plurality of crystalline phase grains.

According to another embodiment of the present invention, a method for forming a magnetic recording medium for heat-assisted magnetic recording includes the steps of providing a heatsink layer and forming at least one intermediate layer over the heatsink layer. The at least one intermediate layer has a plurality of crystalline phase grains separated by a plurality of grain boundary phases. The plurality of grain boundary phases of the at least one intermediate layer have a higher thermal conductivity than a thermal conductivity of the plurality of crystalline phase grains. The method further includes the step of forming a magnetic data storage layer over the at least one intermediate layer. The magnetic data storage layer has a plurality of magnetic grains separated by a plurality of grain boundary phases. The plurality of grain boundary phases of the magnetic data storage layer have a higher thermal conductivity than a thermal conductivity of the plurality of magnetic grains.

According to another embodiment of the present invention, a magnetic recording medium for heat-assisted magnetic recording includes a magnetic data storage layer having a plurality of magnetic grains, a heat sink layer and one or more intermediate layers disposed between the magnetic data storage layer and the heat sink layer. Each of the one or more intermediate layers has a plurality of columnar crystalline phase grains separated by a plurality of grain boundary phases. The plurality of grain boundary phases have a higher thermal conductivity than a thermal conductivity of the plurality of crystalline phase grains.

According to another embodiment of the present invention, a method for forming a magnetic recording medium for heat-assisted magnetic recording includes the steps of providing a heatsink layer and forming at least one intermediate layer over the heatsink layer. The at least one intermediate layer has a plurality of columnar crystalline phase grains separated by a plurality of grain boundary phases. The plurality of grain boundary phases of the at least one intermediate layer have a higher thermal conductivity than a thermal conductivity of the plurality of crystalline phase grains. The method further includes the step of forming a magnetic data storage layer over the at least one intermediate layer, the magnetic data storage layer having a plurality of magnetic grains.

It is to be understood that both the foregoing summary of the invention and the following detailed description are exemplary and explanatory and are intended to provide further explanation of the invention as claimed.

### BRIEF DESCRIPTION OF THE DRAWINGS

The accompanying drawings, which are included to provide further understanding of the invention and are incorporated in and constitute a part of this specification, illustrate embodiments of the invention and together with the description serve to explain the principles of the invention. In the drawings:

Figure 1 illustrates a magnetic recording medium for heat-assisted magnetic recording according to one embodiment of the present invention;

Figure 2 illustrates a magnetic recording medium for heat-assisted magnetic recording according to one embodiment of the present invention;

Figure 3 illustrates a plan view of a magnetic recording medium according to one aspect of the present invention; and

Figure 4 is a flowchart illustrating a method for forming a magnetic recording medium for heat-assisted magnetic recording according to one embodiment of the present invention.

### DETAILED DESCRIPTION OF THE INVENTION

In the following detailed description, numerous specific details are set forth to provide a full understanding of the present invention. It will be apparent, however, to one ordinarily skilled in the art that the present invention may be practiced without some of these specific details. In other instances, well-known structures and techniques have not been shown in detail to avoid unnecessarily obscuring the present invention.

Heat-assisted magnetic recording ("HAMR") is a technology with the potential to solve a number of fundamental problems concerning thermal fluctuation and write capability in magnetic recording media with very high areal densities (*e.g.*, higher than 400 Gbit/in²). At these high areal densities, the use of magnetic materials with a high magnetocrystalline anisotropy constant ("Kᵤ") (*e.g.*, higher than conventional CoCrPt-based alloys) becomes imperative. For example, materials such as FePt, CoPt or Co₅Sm may be used. Due to the high coercivity ("H_{c}") of such materials, however, the write head(s) of a magnetic recording device may be unable to generate a sufficiently strong magnetic field to write to the medium.

To address this issue, in heat-assisted magnetic recording, the recording medium is heated locally during a write operation. Elevating the temperature of the recording medium decreases the coercivity thereof, thereby reducing the strength of the magnetic field required to successfully write to the medium. Accordingly, in HAMR, a highly focused laser beam with a very small spot size (*e.g.*, in the nano-meter range) is used to heat the magnetic medium so that write operations can be performed on the high Kᵤ magnetic data storage layer. This localized heating generates significant heat flux, which, if not dissipated efficiently, may lead to instabilities (*e.g.*, due to the phase transformation of the materials of the different intermediate layers in the media stack as well as interdiffusion and interfacial reactions between the layers).

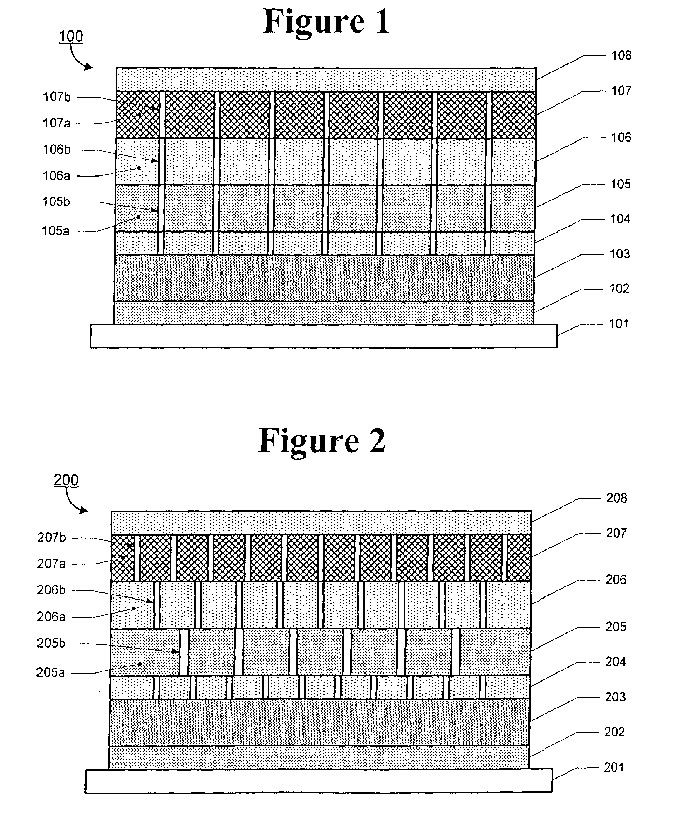

In accordance with various embodiments of the present invention, therefore, magnetic recording media with improved heat dissipation for use in heat-assisted magnetic recording and methods for making such media are provided. Figure 1 illustrates a magnetic recording medium for HAMR according to one embodiment of the present invention. Magnetic recording medium 100 includes a substrate 101, a pre-coat layer 102, a heatsink layer 103, a magnetic data storage layer 107 and an overcoat layer 108. Between heatsink layer 103 and magnetic data storage layer 107 are disposed a number of intermediate layers: a miscellaneous layer 104, an orientation control layer 105, and an underlayer 106.

Magnetic data storage layer 107 includes a plurality of magnetic grains 107a separated by a plurality of grain boundary phases 107b. Grain boundary phases 107b have a higher thermal conductivity than magnetic grains 107a. Similarly, the intermediate layers 104-106 each have crystalline phase grains separated by grain boundary phases. For example, underlayer 106 has crystalline phase grains 106a separated by grain boundary phases 106b, and orientation control layer 105 has crystalline phase grains 105a separated by grain boundary phases 105b. The grain boundary phases for each of the intermediate layers have a higher thermal conductivity than the crystalline phase grains of the same layer. For example, grain boundary phases 106b are more thermally conductive than crystalline phase grains 106a, and grain boundary phases 105b are similarly more thermally conductive than crystalline phase grains 105a.

With this design, the grain boundary phases in the intermediate layers provide high thermal conductivity conduits for dissipating heat generated (*e.g.*, by a HAMR laser) in magnetic data storage layer 107 to heatsink layer 103. The dissipation of this heat prevents interdiffusion and interfacial reactions between magnetic data storage layer 107 and adjacent layers. It also prevents the materials of magnetic data storage layer 107 and other layers from undergoing phase transformation due to excessive heat flux.

According to one aspect of the present invention, by providing crystalline phase grains that are columnar and oriented substantially perpendicular *(i.e.,* along an axis connecting the magnetic data storage layer and the heat sink layer), the heat transport from magnetic data storage layer 107 to heatsink layer 103 may be improved. According to an additional aspect of the present invention, the grain boundary phases of the intermediate layers have a higher thermal conductivity than the magnetic grains in magnetic data storage layer 107, for improving heat dissipation from magnetic data storage layer 107 to heatsink layer 103.

According to an additional aspect of the present invention, heatsink layer 103 has a greater thermal conductivity than the magnetic grains of magnetic data storage layer 107, for improving heat dissipation from magnetic data storage layer 107 to heatsink layer 103. For example, heatsink layer 103 may include materials such as copper ("Cu"), silver ("Ag"), gold ("Au") and/or alloys thereof.

While the foregoing exemplary embodiment of a magnetic recording medium has been described as including a substrate layer, a pre-coat layer and an overcoat layer, the scope of the present invention is not limited to such an arrangement. Rather, as will be apparent to one of skill in the art, the present invention has application to magnetic recording media without any of these layers, with some of these layers, and with other layers not enumerated herein. Moreover, while the intermediate layers depicted above with reference to the present exemplary embodiment have included a miscellaneous layer, an orientation control layer and an underlayer, the scope of the present invention is not limited to such an arrangement of intermediate layers. Rather, the present invention expressly contemplates arrangements in which any number of intermediate layers, including a single intermediate layer, are disposed between the heatsink layer and the magnetic data storage layer. Moreover, these intermediate layers may or may not include any of the particular intermediate layers described herein (*e.g.,* underlayer, orientation control layer, *etc.*).

According to one embodiment of the present invention, the grain boundary phases and crystalline phase grains in the different intermediate layers and in the magnetic data storage layer may vary in composition, width *(i.e.,* cross sectional area), and/or volume fraction. Figure 2 illustrates one such exemplary embodiment, in which a magnetic recording medium for HAMR is illustrated. Magnetic recording medium 200 includes a substrate 201, a pre-coat layer 202, a heatsink layer 203, a magnetic data storage layer 207 and an overcoat layer 208. Between heatsink layer 203 and magnetic data storage layer 207 are disposed a number of intermediate layers: a miscellaneous layer 204, an orientation control layer 205, and an underlayer 206.

Magnetic data storage layer 207 includes a plurality of magnetic grains 207a separated by a plurality of grain boundary phases 207b. Grain boundary phases 207b have a higher thermal conductivity than magnetic grains 207a. Similarly, the intermediate layers 204 - 206 each have crystalline phase grains separated by grain boundary phases. The grain boundary phases (*e.g.*, 205b, 206b) for each of the intermediate layers all have a higher thermal conductivity than that of the crystalline phase grains (*e.g.*, 205a, 206a) of the same layer. As can be seen with reference to Figure 2, the grain boundary phases of the magnetic data storage layer and the intermediate layers vary in width and volume fraction. For example, grain boundary phases 206b of underlayer 206 represent a larger volume fraction thereof than grain boundary phases 205b represent of orientation control layer 205. Grain boundary phases 205b are wider than grain boundary phases 206b.

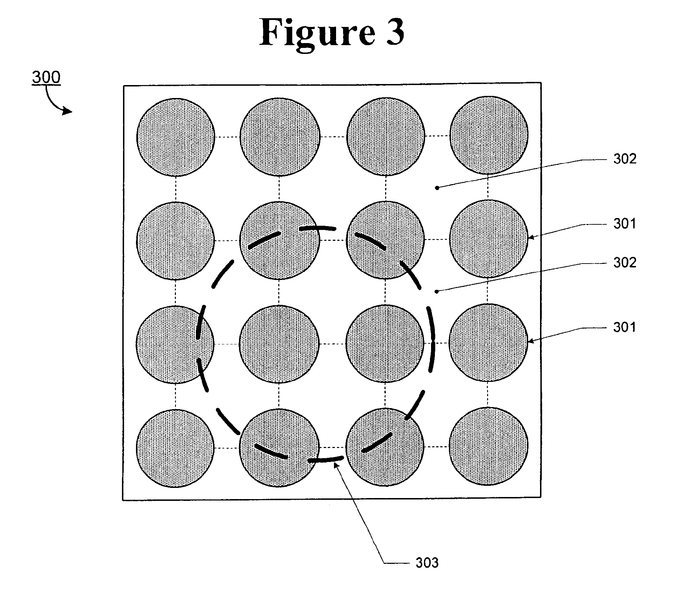

Turning to Figure 3, a plan view of a magnetic recording medium according to one aspect of the present invention is illustrated. During HAMR, a highly focused laser beam with a very small spot size (*e.g.*, in the nano-meter range) is used to heat the magnetic data storage layer, thereby reducing the strength of the magnetic field necessary to write data thereto. The spot size 303 of an exemplary HAMR laser is superimposed upon magnetic recording medium 300 to illustrate that in one embodiment of the present invention, both the grain boundary phases 302 and the grains 301 of the layers therein (*e.g.*, the magnetic data storage layer and/or one or more of the intermediate layers) have a smaller cross-sectional area than the area *(i.e.,* the spot size 303) illuminated by the focused HAMR laser.

While for the sake of simplicity, the exemplary embodiment described above has been illustrated in Figure 3 with uniform circular grains, the scope of the present invention is not limited to such an arrangement. Rather, as will be apparent to those of skill in the art, grains and grain boundary phases in a layer of a magnetic recording medium need not be uniform nor circular, but may rather have any cross-sectional shape and may vary in size and cross-sectional shape within a single layer.

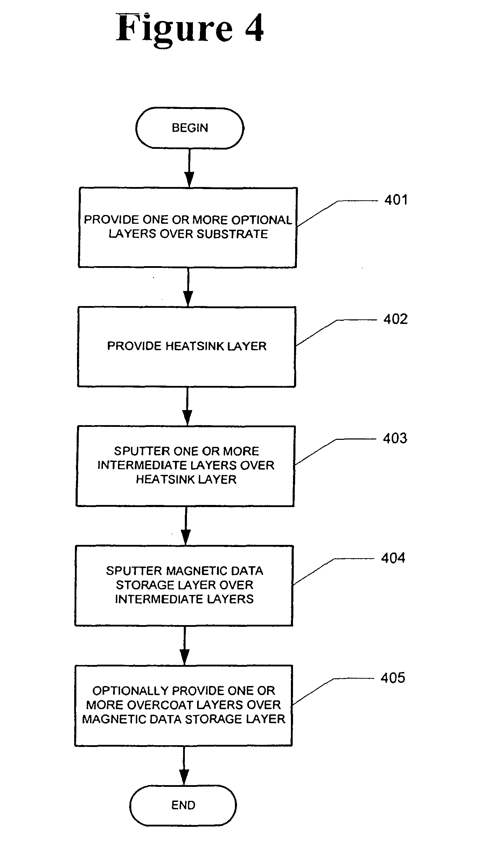

Figure 4 is a flowchart illustrating a method for forming a magnetic recording medium for heat-assisted magnetic recording according to one embodiment of the present invention. The method begins with optional step 401, in which one or more layers are provided over a substrate. The one or more layers may include one or more pre-coat layers, or any other layers known to those of skill in the art. The one or more layers may be provided by magnetron sputtering, physical vapor deposition, chemical vapor deposition, or by any other process of providing layers in a magnetic recording medium readily apparent to those of skill in the art. In step 402, a highly thermally conductive heatsink layer is provided over the one or more layers optionally provided in step 401. The heatsink layer may likewise be provided by magnetron sputtering, physical vapor deposition, chemical vapor deposition, or by any other process known to those of skill in the art.

In step 403, one or more intermediate layers are formed over the heatsink layer. The intermediate layers may be formed by magnetron sputtering, physical vapor deposition, chemical vapor deposition, or by any other process known to those of skill in the art. The one or more intermediate layers may include one or more underlayers, orientation control layers, or any other magnetic or non-magnetic layer known to those of skill in the art. Each intermediate layer includes crystalline phase grains separated by grain boundary phases with a higher thermal conductivity than that of the crystalline phase grains. In step 404, a magnetic data storage layer is formed over the one or more intermediate layers provided in step 403. The data storage layer may likewise be formed by magnetron sputtering, physical vapor deposition, chemical vapor deposition, or by any other process known to those of skill in the art. The magnetic data storage layer includes magnetic grains separated by grain boundary phases with a higher thermal conductivity than that of the magnetic grains. In optional step 405, one or more overcoat layers are provided (*e.g*., by sputtering) over the magnetic data storage layer provided in step 404.

According to one aspect of the present invention, the materials of the grain boundary phases in both the magnetic data storage layer and the one or more intermediate layers have little or no (*e.g.*, less than 10 atomic percent) solid solubility in the material constituting the grains in the same layer. Moreover, according to an additional aspect of the present invention, the material of the grain boundary phases in the one or more intermediate layers have little or no (*e.g.*, less than 10 atomic percent) solid solubility in the material of the magnetic grains of the magnetic data storage layer.

According to one aspect of the present invention, the material of the grain boundary phases of both the magnetic data storage layer and the one or more intermediate layers may be a metallic element or alloy which is insoluble (*e.g.*, having less than 10 atomic percent solid solubility) in the grains of the same layer. According to an alternative aspect of the present invention, the grain boundary phase material may be a ceramic (*e.g.*, an oxide, boride, carbide, nitride, silicate, *etc.*) which is similarly insoluble (*e.g*., having less than 10 atomic percent solid solubility) in the grains of the same layer. According to yet another aspect of the present invention, the grain boundary phase material may be a combination of a ceramic and a metal or metal alloy.

Table 1, below, illustrates several exemplary materials which may be utilized in the grain boundary phases of different layers in a magnetic recording medium according to various aspects of the present invention. As can be seen with reference to Table 1, the thermal conductivity ("k") of each potential material is higher than that of the material of the grains of the same layer (*e.g.*, cobalt for the magnetic data storage layer, ruthenium for the underlayer, nickel for the orientation control layer).

**Table 1**

| | | Mag. Layer (Co) k = 69.21 | Underlayer (Ru) k = 116 | Orient. control layer (Ni) k = 60.7 |
|---|---|---|---|---|
| **Metals** | k (W/m°K) | Solubility in Co at room temp | Solubility in Ru at room temp | Solubility in Ni at room temp |
| Cu | 385 | insoluble | insoluble | insoluble |
| Ag | 419 | insoluble | insoluble | insoluble |
| Au | 301 | insoluble | insoluble | insoluble |
| W | 163.3 | insoluble | soluble | soluble |
| Si | 124 | insoluble | insoluble | soluble |
| Mo | 138 | soluble | soluble | insoluble |
| | | | | |
| **Ceramics** | | | | |
| SiC | 125.6 | insoluble | insoluble | insoluble |
| AlN | 170 | insoluble | insoluble | insoluble |
| BeO | 248 | insoluble | insoluble | insoluble |
| BN (hex) | 200-500 | insoluble | insoluble | insoluble |

For example, as can be seen with reference to Table 1, above, molybdenum ("Mo") may be an appropriate material for the grain boundary phases in a nickel-based orientation control layer according to one embodiment of the present invention, as molybdenum is insoluble in nickel at room temperature, and has a higher thermal conductivity than that of nickel *(i.e.,* 138 > 60.7). Molybdenum, however, may not be an appropriate choice for use in the grain boundary phases of a cobalt-based magnetic data storage layer or a ruthenium-based underlayer, as it is soluble in both cobalt and ruthenium at room temperature. For similar reasons, tungsten ("W") may be appropriate for use in the grain boundary phases of a cobalt-based magnetic data storage layer, but not a ruthenium-based underlayer or a nickel-based orientation control layer.

While the present invention has been particularly described with reference to the various figures and embodiments, it should be understood that these are for illustration purposes only and should not be taken as limiting the scope of the invention. There may be many other ways to implement the invention. Many changes and modifications may be made to the invention, by one having ordinary skill in the art, without departing from the spirit and scope of the invention.

## Claims

1. A magnetic recording medium for heat-assisted magnetic recording ("HAMR") comprising:
a magnetic data storage layer having a plurality of magnetic grains separated by a plurality of grain boundary phases, the plurality of grain boundary phases of the magnetic data storage layer having a higher thermal conductivity than a thermal conductivity of the plurality of magnetic grains;
a heat sink layer; and
one or more intermediate layers disposed between the magnetic data storage layer and the heat sink layer, each of the one or more intermediate layers having a plurality of crystalline phase grains separated by a plurality of grain boundary phases, the plurality of grain boundary phases of the one or more intermediate layers having a higher thermal conductivity than a thermal conductivity of the plurality of crystalline phase grains.

2. The magnetic recording medium of Claim 1, wherein a thermal conductivity of the heat sink layer is greater than a thermal conductivity of the plurality of magnetic grains of the magnetic data storage layer.

3. The magnetic recording medium of Claim 1, wherein, for each of the one or more intermediate layers, the thermal conductivity of the plurality of grain boundary phases is higher than a thermal conductivity of the plurality of magnetic grains of the magnetic data storage layer.

4. The magnetic recording medium of Claim 1, wherein, for each of the one or more intermediate layers, a material of the plurality of grain boundary phases has less than 10 atomic percent solid solubility in a material of the crystalline phase grains.

5. The magnetic recording medium of Claim 1, wherein, for each of the one or more intermediate layers, a material of the plurality of grain boundary phases has less than 10 atomic percent solid solubility in a material of the plurality of magnetic grains of the magnetic data storage layer.

6. The magnetic recording medium of Claim 1, wherein the plurality of magnetic grains comprise a material selected from the group consisting of FePt, CoPt and Co₅Sm.

7. The magnetic recording medium of Claim 1, wherein, for one of the one or more intermediate layers, a material of the plurality of grain boundary phases comprises a ceramic.

8. The magnetic recording medium of Claim 7, wherein, for one of the one or more intermediate layers, the material of the plurality of grain boundary phases is selected from the group consisting of SiC, AlN, BeO and BN.

9. The magnetic recording medium of Claim 1, wherein, for one of the one or more intermediate layers, a material of the plurality of grain boundary phases comprises a metal or a metal alloy.

10. The magnetic recording medium of Claim 9, wherein, for one of the one or more intermediate layers, the material of the plurality of grain boundary phases is selected from the group consisting of Cu, Ag, Au, W, Si, Mo, a Cu alloy, a Ag alloy, a Au alloy, a W alloy, a Si alloy and a Mo alloy.

11. The magnetic recording medium of Claim 1, wherein, for one of the one or more intermediate layers, a material of the plurality of grain boundary phases comprises a combination of a ceramic and either a metal or a metal alloy.

12. The magnetic recording medium of Claim 1, wherein the plurality of crystalline phase grains of the one or more intermediate layers comprise columnar grains substantially oriented along an axis connecting the magnetic data storage layer and the heat sink layer.

13. The magnetic recording medium of Claim 1, wherein each of the plurality of grain boundary phases of the magnetic data storage layer has a cross-sectional area less than a spot size of a focused laser beam used in HAMR, and wherein each of the plurality of grain boundary phases of the one or more intermediate layers has a cross-sectional area less than a spot size of a focused laser beam used in HAMR.

14. The magnetic recording medium of Claim 1, wherein the heatsink layer includes a material selected from the group consisting of Cu, Ag, Au, W, Si, Mo, a Cu alloy, a Ag alloy, a Au alloy, a W alloy, a Si alloy and a Mo alloy.

15. A method for forming a magnetic recording medium for heat-assisted magnetic recording ("HAMR"), the method comprising the steps of:
providing a heatsink layer;
forming at least one intermediate layer over the heatsink layer, the at least one intermediate layer having a plurality of crystalline phase grains separated by a plurality of grain boundary phases, the plurality of grain boundary phases of the at least one intermediate layer having a higher thermal conductivity than a thermal conductivity of the plurality of crystalline phase grains; and
forming a magnetic data storage layer over the at least one intermediate layer, the magnetic data storage layer having a plurality of magnetic grains separated by a plurality of grain boundary phases, the plurality of grain boundary phases of the magnetic data storage layer having a higher thermal conductivity than a thermal conductivity of the plurality of magnetic grains.

16. The method of Claim 15, wherein forming the at least one intermediate layer comprises sputtering the at least one intermediate layer over the heatsink layer.

17. The method of Claim 15, wherein forming the magnetic data storage layer comprises sputtering the magnetic data storage layer over the at least one intermediate layer.

18. The method of Claim 15, wherein a thermal conductivity of the heat sink layer is greater than a thermal conductivity of the plurality of magnetic grains of the magnetic data storage layer.

19. The method of Claim 15, wherein the thermal conductivity of the plurality of grain boundary phases of the at least one intermediate layer is higher than a thermal conductivity of the plurality of magnetic grains of the magnetic data storage layer.

20. The method of Claim 15, wherein a material of the plurality of grain boundary phases of the at least one intermediate layer has less than 10 atomic percent solid solubility in a material of the crystalline phase grains of the at least one intermediate layer.

21. The method of Claim 15, wherein a material of the plurality of grain boundary phases of the at least one intermediate layer has less than 10 atomic percent solid solubility in a material of the plurality of magnetic grains of the magnetic data storage layer.

22. The method of Claim 15, wherein the plurality of magnetic grains comprise a material selected from the group consisting of FePt, CoPt and Co₅Sm.

23. The method of Claim 15, wherein a material of the plurality of grain boundary phases of the at least one intermediate layer comprises a ceramic.

24. The method of Claim 23, wherein the material of the plurality of grain boundary phases of the at least one intermediate layer is selected from the group consisting of SiC, AlN, BeO and BN.

25. The method of Claim 15, wherein a material of the plurality of grain boundary phases of the at least one intermediate layer comprises a metal or a metal alloy.

26. The method of Claim 25, wherein the material of the plurality of grain boundary phases of the at least one intermediate layer is selected from the group consisting of Cu, Ag, Au, W, Si, Mo, Cu alloys, Ag alloys, Au alloys, W alloys, Si alloys and Mo alloys.

27. The method of Claim 15, wherein a material of the plurality of grain boundary phases of the at least one intermediate layer comprises a combination of a ceramic and either a metal or a metal alloy.

28. The method of Claim 15, wherein the plurality of crystalline phase grains of the at least one intermediate layer comprise columnar grains substantially oriented along an axis connecting the magnetic data storage layer and the heat sink layer.

29. The method of Claim 15, wherein each of the plurality of grain boundary phases of the magnetic data storage layer has a cross-sectional area less than a spot size of a focused laser beam used in HAMR, and wherein each of the plurality of grain boundary phases of the at least one intermediate layer has a cross-sectional area less than a spot size of a focused laser beam used in HAMR.

30. The method of Claim 15, wherein the heatsink layer includes a material selected from the group consisting of Cu, Au, Ag, Cu alloys, Au alloys and Ag alloys.

31. A magnetic recording medium for heat-assisted magnetic recording ("HAMR") comprising:
a magnetic data storage layer having a plurality of magnetic grains;
a heat sink layer; and
one or more intermediate layers disposed between the magnetic data storage layer and the heat sink layer, each of the one or more intermediate layers having a plurality of columnar crystalline phase grains separated by a plurality of grain boundary phases, the plurality of grain boundary phases having a higher thermal conductivity than a thermal conductivity of the plurality of crystalline phase grains.

32. A method for forming a magnetic recording medium for heat-assisted magnetic recording ("HAMR"), the method comprising the steps of:
providing a heatsink layer;
forming at least one intermediate layer over the heatsink layer, the at least one intermediate layer having a plurality of columnar crystalline phase grains separated by a plurality of grain boundary phases, the plurality of grain boundary phases of the at least one intermediate layer having a higher thermal conductivity than a thermal conductivity of the plurality of crystalline phase grains; and
forming a magnetic data storage layer over the at least one intermediate layer, the magnetic data storage layer having a plurality of magnetic grains.
